# EUROPÄISCHE PATENTSCHRIFT

(11) **EP 0 441 301 B1**
(45) Veröffentlichungstag und Bekanntmachung des Hinweises auf die Patenterteilung: **22.06.1994**
(21) Anmeldenummer: 91101473.6
(22) Anmeldetag: 04.02.1991
(51) Int. Cl.: C04B 35/58

(54) **Verfahren zur Herstellung von Formkörpern aus Siliciumnitrid**
Process for the production of shaped bodies of silicon nitride
Procédé de production de corps façonnés de nitrure de silicium

(30) Priorität: 06.02.1990 DE 4003457
(43) Veröffentlichungstag der Anmeldung: 14.08.1991
(73) Patentinhaber: SKW Trostberg Aktiengesellschaft, 83308 Trostberg (DE)
(72) Erfinder: Hintermayer, Jochen, W-8223 Trostberg (DE)
(74) Vertreter: Huber, Bernhard, Dipl.-Chem.

(56) Entgegenhaltungen:
- DE-A- 3 937 413

## Beschreibung

Gegenstand der Erfindung ist ein Verfahren zur Herstellung von Formkörpern aus Siliciumnitrid (Si₃ N₄) durch Verpressen von Siliciumnitridteilchen und anschließendes Sintern der Preßlinge.

Es ist bekannt, Formkörper aus Siliciumnitrid durch Verpressen von α-Si₃N₄ mit Sinterhilfsmitteln und anschließendem Sintern herzustellen (vgl. EP-A 262 654). Zur Erzielung hoher Dichten muß ausschließlich von α-Si₃N₄ ausgegangen werden, das als relativ teurer Rohstoff angesehen werden muß. Weitere Nachteile dieses Verfahrens sind die aufwendige Formgebung sowie der negative Einfluß der Sinterhilfsmittel auf die Hochtemperatureigenschaften des resultierenden Formkörpers.

Um die bei der Verwendung von Sinterhilfsmitteln auftretenden Nachteile zu vermeiden, wurde gemäß einem weiteren Verfahren vorgeschlagen, Siliciumnitridpulver mit Siliciumpulver zu mischen, das Gemisch zu verpressen und dann unter einer Stickstoffatmosphäre zu sintern, wobei sich eine Phasenumwandlung von α- zu β-Si₃N₄ in der flüssigen Siliciumphase vollzieht (J.AM.Ceram.Soc. 70 (19) 1987 C-240 b. C-242). Der Nachteil des großen technischen Aufwands, bedingt durch den Einsatz von teurem α-Si₃N₄ als Rohstoff sowie durch das aufwendige Formgebungsverfahren, ist aber auch bei diesem Verfahren gegeben.

Schließlich entspricht das Reaktionssintern von Silicium-Metallpulver unter Stickstoffatmosphäre dem allgemeinen Stand der Technik. Zwar ist der dafür erforderliche Rohstoff vergleichsweise kostengünstig, doch benötigt die Formgebung den Zusatz von temporären Bindemitteln, die üblicherweise vor dem Nitrierbrand ausgebrannt werden müssen, wobei zur Vermeidung von Siliciummetall-Ausschmelzungen ein aufwendiger und langwieriger Brennprozeß erforderlich ist.

Es bestand daher die Aufgabe, ein Verfahren zur Herstellung von Formkörpern aus Siliciumnitrid durch Verpressen von Si₃ N₄ -Teilchen und anschließendes Sintern der Preßlinge zu entwickeln, welches die genannten Nachteile des Standes der Technik nicht aufweist, sondern mit geringem technischen Aufwand im Hinblick auf das Ausgangsmaterial und die Formgebung die Herstellung von Si₃ N₄ -Formkörpern ermöglicht.

Diese Aufgabe wurde erfindungsgemäß dadurch gelöst, daß man aus teilazotiertem Siliciumnitrid mit einem N-Gehalt von 1 bis 25 Gew.-% Preßlinge formt und diese bei erhöhter Temperatur unter einer inerten stickstoffhaltigen Atmosphäre sintert.

Es hat sich nämlich überraschenderweise gezeigt, daß mit Hilfe des erfindungsgemäßen Verfahrens auch ohne Zuhilfenahme von Sinterhilfsmitteln formstabile und hochfeste Si₃ N₄ -Formkörper hergestellt werden können.

Beim Verfahren entsprechend der vorliegenden Erfindung wird als Ausgangsmaterial ein teilazotiertes Siliciumnitrid eingesetzt, welches einen N-Gehalt von 1 bis 25 Gew.-%, vorzugsweise 5 bis 15 Gew-%, aufweist. Solche teilazotierten Si₃N₄-Teilchen und ihr Herstellungsverfahren sind aus der deutschen Patentanmeldung DE-A-39 37 413.0 bekannt. Die Herstellung erfolgt dabei durch Reaktion von Siliciumpulver mit Stickstoff unter ständigem Umwälzen, vorzugsweise im Drehrohrofen, bei 1000°C bis 1800°C und 1,01 bis 1,8 bar, wobei das Produkt als poröses, kugelförmiges Granulat anfällt.

Ein hinsichtlich der Rohstoffkosten bedeutsamer Vorteil des erfindungsgemäßen Verfahrens ist, daß als Ausgangsprodukt das Si₃N₄ nicht notwendigerweise in α-Form eingesetzt werden muß, sondern auch in reiner β-Form oder im Gemisch, bestehend aus α- und β-Modifikation, verwendet werden kann.

Für die Herstellung der Preßlinge kann das teilazotierte Siliciumnitrid in Form von Pulvern mit einer Teilchengröße < 100 »m, vorzugsweise < 20 »m, eingesetzt werden. Es hat sich jedoch alternativ als besonders vorteilhaft erwiesen, das Siliciumnitrid in Form von Granulaten mit einer Teilchengröße von 0,1 bis 20 mm einzusetzen. Aufgrund der besonderen Rieselfähigkeit dieses Produktes wird die Beschickung der Preßformen hierdurch positiv beeinflußt.

Durch die Korngröße des Ausgangsmaterials sowie durch den Preßdruck lassen sich Gefüge und Dichte der Preßlinge bekanntermaßen beeinflussen.

Die Preßlinge, die üblicherweise in Form von Tabletten, Briketts, Platten, Steinen, Rinnen o.ä. hergestellt werden, weisen in der Regel Dichten von 1,0 bis 2,5 g/cm³ auf, wobei Preßdrucke von 100 bis 1000 N/mm² erforderlich sind. Will man die Dichte bei gleichen Preßbedingungen noch weiter erhöhen, so empfiehlt es sich, auf übliche Preßhilfsmittel wie z.B. Polyvinylalkohol oder andere Substanzen wie z.B. Wachsemulsionen, Polyethylenaddukte, Sulfitablaugen oder Fettsäuren zurückzugreifen. Der Polyvinylalkohol kann ggf. auch in verdünnter wäßriger Lösung eingesetzt werden. Das Preßhilfsmittel wird vorzugsweise in Mengen von 1 bis 30 Gew.-% bezogen auf das Gewicht der Siliciumnitridteilchen verwendet. Bei Verwendung von Preßhilfsmitteln müssen die Preßlinge ggf. vor dem Sinterprozeß noch getrocknet werden.

Nach der Herstellung der Preßlinge aus teilazotiertem Siliciumnitrid werden diese bei erhöhten Temperaturen, insbesondere oberhalb 1200°C unter einer inerten stickstoffhaltigen Atmosphäre gesintert. Bei dieser Sinterung findet gleichzeitig eine Azotierung, d.h. ein weiterer Einbau von Stickstoff in den Formkörper statt. Diese Azotierung verläuft vorzugsweise im wesentlichen vollständig, d.h. bis zu einem annähernd stöchiometrischen Stickstoffgehalt im Bereich von 38 bis 40 Gew.-% Sticksotff. Es ist ein besonderer Vorteil des erfindungsgemäßen Verfahrens, daß das Sintern und Durchazotieren in einem Schritt vorgenommen werden kann. Die Azotierung des Si₃N₄-Körpers ist vollständig, wenn die Stickstoffaufnahme aus der Sinteratmosphäre beendet ist.

Während das Sintern bzw. der keramische Brand von Siliciumnitrid bei bekannten Verfahren durch langsames Aufheizen (3 bis 8 Stunden) auf die Sintertemperatur und anschließende 10- bis 24-stündige Temperaturbehandlung erfolgt, ist es mit Hilfe des erfindungsgemäßen Verfahrens möglich, Aufheiz- und Sinterphase entscheidend zu verkürzen. In der Regel kann man den Preßling in ca. 5 bis 90 Minuten stufenweise auf die bevorzugte Sintertemperatur von 1300°C bis 1500°C bringen. Man behält diese Temperatur bis zur Beendigung der Stickstoffaufnahme (= Ende der Azotierung) bei, wobei normalerweise nach 1 bis 6 Stunden die Reaktion beendet ist.

Die Azotierung kann unter einer inerten stickstoffhaltigen Atmosphäre, d.h. entweder in reiner Stickstoffatmosphäre erfolgen oder aber in einem Gemisch aus Stickstoff und Inertgas erfolgen, wobei als Inertgas Edelgase wie z.B. Argon oder Wasserstoff als bevorzugt anzusehen sind.

Nach diesem zweiten Verfahrensschritt fallen die gesinterten Formkörper mit einer Dichte von ca. 2,0 bis 2,5 g/cm³ und einem Stickstoffgehalt von ca. 38 bis 39 Gew.-% an. Die erhaltenen Körper sind weitgehend formstabil und weisen eine gute Kaltdruckfestigkeit auf, die in der Regel bei > 300 N/mm² liegt.

Die nachfolgenden Beispiele sollen die Erfindung näher erläutern.

### Beispiel 1

Ein teilazotiertes Siliciumnitridpulver mit einer Teilchengröße < 20 »m und einem N-Gehalt von 9,62 Gew.-% wurde mit 150 N/mm² Preßdruck zu einer Tablette mit Durchmesser von 25 mm und einer Dicke von 13,5 mm verpreßt. Die Dichte der Preßlinge betrug 1,44 g/cm³. Anschließend wurde die Tablette 4 Stunden mit Stickstoff auf 1360°C aufgeheizt und unter Stickstoffatmosphäre in 6 Stunden fertiggebrannt. Nach dem Brand betrug der Stickstoffgehalt 38,73 Gew.-%, die Dichte 2,05 g/cm³, die Form blieb unverändert. Die Kaltdruckfestigkeit betrug 345 N/mm².

### Beispiel 2

Ein Preßling, hergestellt nach Beispiel 1, wurde in 1 Stunde auf 1340°C aufgeheizt, in 15 Minuten dann auf 1400°C und dort 1 Stunde unter N₂-Atmosphäre gehalten. Nach dem Brand hatte die Tablette einen N-Gehalt von 38,92 Gew.-%, eine Dichte von 2,08 g/cm³, die Form blieb erhalten. Die Kaltdruckfestigkeit betrug 305 N/mm².

### Beispiel 3

Ein teilazotiertes Siliciumnitrid in Granulatform (Teilchengröße 2 mm) und einem N-Gehalt von 8,1 Gew.-% wurde wie in Beispiel 1 beschrieben zu einer Tablette verpreßt und anschließend entsprechend Beispiel 1 gebrannt. Das fertige Produkt hatte einen N-Gehalt von 38,6 Gew.-%, eine Dichte von 1,97 g/cm³ und eine berechnete Porosität von 38,4 %. Die Kaltdruckfestigkeit betrug 302 N/mm².

### Beispiel 4

Das teilazotierte Si₃ N₄ -Granulat entsprechend Beispiel 3 wurde mit 400 N/mm² verpreßt. Die Brennbedingungen entsprachen denjenigen von Beispiel 3. Der fertige Körper hatte einen Stickstoffgehalt von 39,21 Gew.-%, eine Dichte von 2,22 g/cm³ und eine Porosität von 30,4 %. Die Kaltdruckfestigkeit lag höher als 300 N/mm².

### Beispiel 5

Dem teilazotierten Si₃ N₄ -Granulat entsprechend Beispiel 3 wurde vor dem Verpressen eine 50 %ige wäßrige Polyvinylalkohol-Lösung in einer Menge von 20 Gew.-% zugemischt. Der Preßdruck lag ebenfalls bei 400 N/mm². Anschließend wurde die Probe bei 400°C getrocknet. Nach dem Trocknen erfolgte ein Azotierbrand wie unter Beispiel 1 beschrieben. Die gebrannte Tablette hatte einen N-Gehalt von 38,5 Gew.-%, eine Dichte von 2,37 g/cm³ und eine errechnete Porosität von 25,7 %. Die Kaltdruckfestigkeit lag bei 370 N/mm².

## Patentansprüche

1. Verfahren zur Herstellung von Formkörpern aus Siliciumnitrid durch Verpressen von teilchenförmigem Ausgangsmaterial und anschließendes Sintern der Preßlinge,
**dadurch gekennzeichnet**,
daß man als Ausgangsmaterial teilazotiertes Siliciumnitrid mit einem N-Gehalt von 1 bis 25 Gew.-% zur Formung der Preßlinge verwendet und die Preßlinge dann bei Temperaturen oberhalb 1200°C unter einer inerten stickstoffhaltigen Atmosphäre sintert.

2. Verfahren nach Anspruch 1,
**dadurch gekennzeichnet**,
daß das teilazotierte Siliciumnitrid einen N-Gehalt von 5 bis 15 Gew.-% aufweist.

3. Verfahren nach Anspruch 1 oder 2,
**dadurch gekennzeichnet**,
daß man als Ausgangsmaterial teilazotiertes Siliciumnitrid verwendet, das in reiner β-Form oder als Gemisch aus α- und β-Form vorliegt.

4. Verfahren nach den Ansprüchen 1 bis 3,
**dadurch gekennzeichnet**,
daß man für die Herstellung der Preßlinge das teilazotierte Siliciumnitrid in Form von Pulver mit einer Teilchengröße von < 100 »m, vorzugsweise < 20 »m, einsetzt.

5. Verfahren nach Anspruch 1 bis 3,
**dadurch gekennzeichnet**,
daß man für die Herstellung der Preßlinge das teilazotierte Siliciumnitrid in Granulatform mit einer Teilchengröße von 0,1 bis 20 mm verwendet.

6. Verfahren nach den Ansprüchen 1 bis 5,
**dadurch gekennzeichnet**,
daß die Preßlinge vor dem Sintern eine Dichte von 1,0 bis 2,5 g/cm³ aufweisen.

7. Verfahren nach den Ansprüchen 1 bis 6,
**dadurch gekennzeichnet**,
daß man bei der Herstellung der Preßlinge Preßhilfsmittel verwendet.

8. Verfahren nach Anspruch 7,
**dadurch gekennzeichnet**,
daß die Menge an Preßhilfsmittel 1 bis 30 Gew.-% bezogen auf das teilazotierte Siliciumnitrid beträgt.

9. Verfahren nach einem der Ansprüche 1 bis 8,
**dadurch gekennzeichnet**,
daß man die Preßlinge unter einer Stickstoff- oder Stickstoff/Inertgas-Atmosphäre bei Temperaturen oberhalb 1200°C bis zu einer im wesentlichen vollständigen Azotierung sintert.

10. Verfahren nach den Ansprüchen 1 bis 9,
**dadurch gekennzeichnet**,
daß man das Sintern bei 1300°C bis 1500°C vornimmt.

11. Verfahren nach den Ansprüchen 1 bis 10,
**dadurch gekennzeichnet**,
daß man die Preßlinge in 5 bis 90 Minuten stufenweise auf eine Temperatur von 1300°C bis 1500°C bringt und die Preßlinge bis zur Beendigung der Stickstoffaufnahme sintert.

## Claims

1. Process for the production of formed bodies from silicon nitride by pressing of particulate starting material and subsequent sintering of the pressed bodies, characterised in that, as starting material, one uses partly nitrogenised silicon nitride with an N-content of 1 to 25 wt.% for the forming of the pressed bodies and then sinters the pressed bodies at temperatures above 1200°C under an inert, nitrogen-containing atmosphere.

2. Process according to claim 1, characterised in that the partly nitrogenised silicon nitride has an N-content of 5 to 15 wt.%.

3. Process according to claim 1 or 2, characterised in that, as starting material, one uses a partly nitrogenised silicon nitride which is present in pure β-form or as a mixture of α- and β-form,

4. Process according to claims 1 to 3, characterised in that, for the production of the pressed bodies, one uses the partly nitrogenised silicon nitride in the form of powder with a particle size of < 100 »m, preferably of < 20 »m.

5. Process according to claims 1 to 3, characterised in that, for the production of the pressed bodies, one uses the partly nitrogenised silicon nitride in granulate form with a particle size of 0.1 to 20 mm.

6. Process according to claims 1 to 5, characterised in that, before the sintering, the pressed bodies have a density of 1.0 to 2,5 g/cm³.

7. Process according to claims 1 to 6, characterised in that, in the case of the production of the pressed bodies, one uses pressing adjuvants.

8. Process according to claim 7, characterised in that the amount of pressing adjuvants amounts to 1 to 30 wt.%, referred to the partly nitrogenised silicon nitride.

9. Process according to one of claims 1 to 8, characterised in that one sinters the pressed bodies under a nitrogen or nitrogen/inert gas atmosphere at temperatures above 1200°C up to a substantially complete nitrogenisation.

10. Process according to claims 1 to 9, characterised in that one carries out the sintering at 1300°C to 1500°C.

11. Process according to claims 1 to 10, characterised in that one brings the pressed bodies stepwise in 5 to 90 minutes to a temperature of 1300°C to 1500°C and sinters the pressed bodies up to the ending of the nitrogen take-up.

## Revendications

1. Procédé de préparation de corps moulés en nitrure de silicium par compression d'un produit de départ particulaire puis frittage des pièces pressées, caractérisé en ce que l'on utilise comme produit de départ pour le façonnage des pièces pressées un nitrure de silicium partiellement azoté ayant une teneur en azote de 1 à 25 % en masse, et on fritte ensuite les pièces pressées à des températures supérieures à 1200°C sous une atmosphère inerte contenant de l'azote.

2. Procédé selon la revendication 1, caractérisé en ce que le nitrure de silicium partiellement azoté a une teneur en azote de 5 à 15 % en masse.

3. Procédé selon la revendication 1 ou 2, caractérisé en ce que l'on utilise comme produit de départ du nitrure de silicium partiellement azoté qui se présente sous une forme β pure ou en mélange des formes α et β.

4. Procédé selon les revendications 1 à 3, caractérisé en ce que l'on utilise pour la préparation des pièces pressées le nitrure de silicium partiellement azoté sous forme d'une poudre ayant une taille de particules inférieure à 100 »m, de préférence inférieure à 20 »m.

5. Procédé selon les revendications 1 à 3, caractérisé en ce que l'on utilise pour la préparation des pièces pressées le nitrure de silicium partiellement azoté sous forme d'un granulé ayant une taille de particules de 0,1 à 20 mm.

6. Procédé selon les revendications 1 à 5, caractérisé en ce que les pièces pressées présentent avant le frittage une densité de 1,0 à 2,5 g/cm³.

7. Procédé selon les revendications 1 à 6, caractérisé en ce que l'on utilise des auxiliaires de compression lors de la préparation des pièces pressées.

8. Procédé selon la revendication 7, caractérisé en ce que la quantité d'auxiliaire de compression est de 1 à 30 % en masse par rapport au nitrure de silicium partiellement azoté.

9. Procédé selon les revendications 1 à 8, caractérisé en ce que l'on fritte les pièces pressées sous une atmosphère d'azote ou d'azote/gaz inerte à des températures supérieures à 1200°C jusqu'à une azotation essentiellement complète.

10. Procédé selon les revendications 1 à 9, caractérisé en ce que l'on effectue le frittage à une température comprise entre 1300°C et 1500°C.

11. Procédé selon les revendications 1 à 10, caractérisé en ce que l'on porte par paliers les pièces pressées, en 5 à 90 minutes, à une température de 1300°C à 1500°C, et on fritte les pièces pressées jusqu'à la fin de l'absorption d'azote.
